# EUROPEAN PATENT APPLICATION

(11) **EP 3 826 003 A1**
(43) Date of publication of application: **26.05.2021**
(21) Application number: 20208125.3
(22) Date of filing: 17.11.2020
(51) Int. Cl.: G10L 15/00, G10L 15/22, G10L 15/30

(54) **METHOD AND SYSTEM FOR CONTROLLING AND/OR INTERACTING WITH A HOUSEHOLD APPLIANCE BY MEANS OF VOICE COMMANDS AND WITH RECOGNITION OF THE LANGUAGE OF THE VOICE COMMANDS, AND CORRESPONDING HOUSEHOLD APPLIANCE**

(30) Priority: 22.11.2019 IT 201900021933
(71) Applicant: Candy S.p.A., 20052 Monza (MB) (IT)
(72) Inventor: SERGI, Leonardo, I-20900 Monza, MONZA E BRIANZA (IT)
(74) Representative: Brunazzi, Stefano

(57) **Abstract**

A method is described for controlling and/or communicating with a household appliance 100 by means of a voice command and with the recognition of the language by means of which the voice command is expressed.

The method comprises the steps of receiving a voice acoustic signal SV, corresponding to a voice utterance of a query and/or request pronounced by a user, and generating a corresponding first electric signal SE representative of the voice acoustic signal SV, by voice receiving means 2 integrated in the household appliance 100.

The method further includes generating a query and/or request electric signal SR, on the basis of the first electric signal SE received, by first processing means 3 integrated in the household appliance 100 operatively connected to the voice reception means 2; and transmitting the query and/or request electric signal SR to second processing means 4.

The method then comprises the step of acquiring information relating to an expression language of the user, by means of which the voice expression of a query and/or request uttered by the user has been expressed, based on a processing of the query and/or request electric signal SR, or on the basis of a command by the user.

The method further includes verifying, by the second processing means 4, whether the expression language of the user belongs to a predefined set of manageable languages or not.

If the expression language of the user belongs to the predefined set of manageable languages, the method further comprises the following steps: recognizing the expression language of the user; considering such a recognized language as the operating language; analyzing the aforesaid query and/or request electric signal SR, on the basis of the recognized operating language, to identify a user query and/or request; determining a response to be provided to the user, in the recognized operating language, on the basis of the user query and/or request identified; generating a response electric signal C corresponding to the determined response; and transmitting the response electric signal C to the first processing means 3 of the household appliance.

If instead, during the verification step, a language belonging to the predefined set of manageable languages is not identified, the method comprises the following further steps: generating and sending to the user an interlocutory response in one or more languages predefined as the standard language or languages for an interlocutory communication, in which such an interlocutory response comprises a request to the user for further information and/or indications for the user.

The method finally includes providing the user with a visual and/or written and/or voice response, corresponding to the aforesaid determined response, expressed in the recognized operating language (if the language of expression of the user has been recognized as one of the manageable languages), or corresponding to the aforesaid interlocutory response, expressed in the standard language (if the language of expression of the user has not been recognized as belonging to the set of manageable languages).

## Description

### TECHNOLOGICAL BACKGROUND OF THE INVENTION

### Field of application.

The present invention, in general, relates to the technical field of voice control for household appliances.

In particular, the invention relates to a method and a system for controlling and/or communicating with a household appliance by means of voice commands and with the recognition of the language by means of which the voice command is expressed.

### Description of the prior art.

In the technical field of household appliances equipped with an advanced user interface, many solutions which allow to control the household appliance and/or to communicate therewith by means of voice commands are known.

In this field, there is to be faced the issue of managing the language by means of which the command is expressed and must be understood.

Conventionally, the household appliance is set in an operating language (associated, for example, to the language of the country for which the household appliance is commercially destined).

In this regard, the need arises to identify solutions which allow a flexible setting of the language of use and, ideally, also an automatic recognition of the language, so that the household appliances may be used by users of different languages and different countries.

Such a need poses difficult requirements, considering the number of languages which must be potentially managed (for example, the languages of all the countries to which the household appliance may be commercially intended, which are usually many).

The needs and requirements are even more stringent if the household appliance includes the possibility of providing feedback by displaying the text of the response. This feature, in fact, also imposes the need to manage, for each language of use, not only a voice response but also the written feedback (also taking into account, for example, the orthography of the language).

The technical field taken into consideration shows then a further issue: even assuming that a set of manageable and comprehensible languages may be selected in a household appliance, anyway the possibility remains that the command is given in a language other than those which are settable and/or manageable: in such a case, it may happen that the flow of the control procedure is blocked, and that no feedback is given to the user.

When facing the issues indicated above, the solutions known to date do not provide a fully satisfactory response.

In this context, the need is therefore strongly felt to provide methods and systems for controlling and/or communicating with a household appliance by means of voice commands, allowing to manage the voice command in the most flexible and effective manner, both with regards to the language in which the command is given, as well as to the language in which a response to be provided is desired.

### SUMMARY OF THE INVENTION

It is the object of the present invention to provide a method for controlling and/or communicating with a household appliance by means of a voice command (or, more generally, a voice input) and with the recognition of the language of expression of the voice command or input, which allows to solve, at least partially, the drawbacks described above with reference to the prior art and respond to the aforesaid needs particularly felt in the technical field under consideration. Such an object is achieved by a method according to claim 1.

Further embodiments of such a method are defined in claims 2-9.

It is a further object of the present invention to provide a system for controlling and/or communicating with a household appliance by means of a voice command (or, more generally, a voice input) and with the recognition of the language of expression of the voice command or input, capable of implementing the aforesaid method. Such a system is defined in claim 10.

Further embodiments of the system are defined in claims 11-14.

It is a further object of the present invention a household appliance adapted to be controlled by means of a voice command or input and with the recognition of the language by means of which the voice command or input is expressed, in accordance with the aforesaid method. Such a household appliance is defined in claim 15.

### BRIEF DESCRIPTION OF THE DRAWINGS

Further features and advantages of the method and system according to the invention will become apparent from the following description of preferred embodiments, given by way of indicative, non-limiting examples, with reference to the accompanying drawings, in which:
- Figures 1 and 2 show, by means of respective simplified block diagrams, two respective embodiments of a system for controlling and/or communicating with a household appliance by means of a voice input or command, in accordance with the present invention;
- Figure 3 shows an embodiment of a household appliance according to the invention.

### DETAILED DESCRIPTION

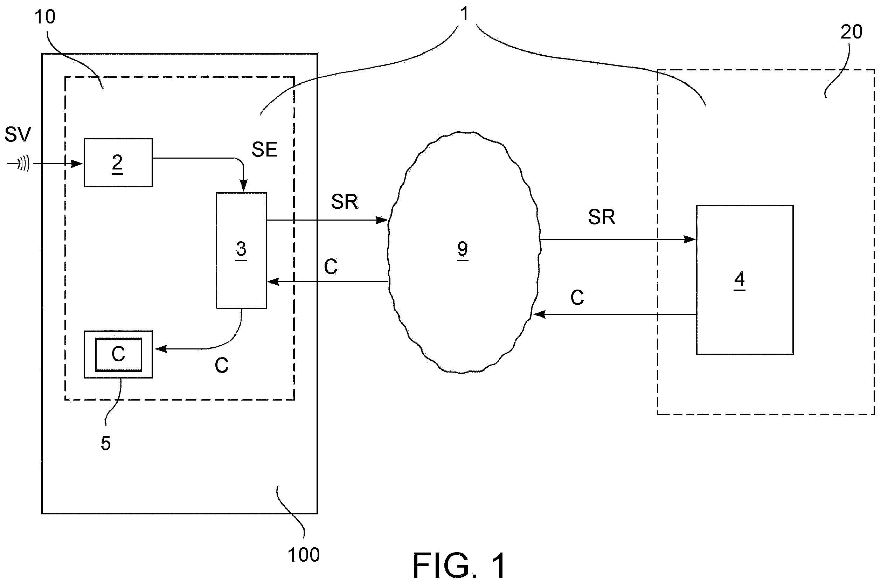

With reference to Figure 1, a method is described for controlling and/or communicating with a household appliance 100 by means of a voice input (for example, a voice command) by a user and with the recognition of the language by means of which the voice command or input is expressed.

The method firstly comprises the steps of receiving a voice acoustic signal SV, corresponding to a voice utterance (i.e., expression) of a query and/or request pronounced (i.e., uttered) by the user, and generating a corresponding first electric signal SE representative of the voice acoustic signal SV, by voice receiving means 2 integrated in the household appliance 100.

The method further includes generating a query and/or request electric signal SR, on the basis of the aforesaid first electric signal SE received, representative of the voice acoustic signal SV, by first processing means 3 integrated in the household appliance 100 operatively connected to the aforesaid voice receiving means 2; and transmitting the electric query and/or request signal SR to second processing means 4.

The method then comprises the step of acquiring information relating to an expression language of the user, by means of which the voice utterance of a query and/or request pronounced by the user has been expressed, based on a processing of the aforesaid query and/or request electric signal SR, or on the basis of information provided by the user.

The method further includes verifying, by the second processing means 4, whether the expression language of the user belongs or not to a predefined set of languages (for example, a predefined set of languages which are manageable and/or recognizable by the second processing means).

If it is verified that the expression language of the user belongs to the aforesaid predefined set of languages, the method further comprises the following steps, by the second processing means 4: recognizing the expression language of the user; considering such a recognized language as the operating language; analyzing the aforesaid query and/or request electric signal SR, by the second processing means 4, on the basis of the recognized operating language, to identify a user query and/or request; determining a response to be provided to the user, in the recognized operating language, based on the user query and/or request identified; generating a response electric signal C corresponding to the determined response; and transmitting the aforesaid response electric signal C to the first processing means 3 of the household appliance.

In this case, the method finally includes providing the user with a visual and/or written and/or voice response, by means of visual display means 5 or sound reproduction means 7 comprised in the household appliance 10, on the basis of the aforesaid response electric signal C, in which the visual and/or written and/or voice response corresponds to the determined response, expressed in the recognized operating language.

If instead, during the verification step, a language belonging to the aforesaid predefined set of languages is not identified, the method comprises the following further steps, again by the second processing means 4: generating and sending to the user an interlocutory response in one or more languages predefined as the standard language or languages for an interlocutory communication, in which such an interlocutory response comprises a request to the user for further information and/or indications for the user.

In this case, the method finally includes providing the user with the aforesaid interlocutory response, by means of visual display means 5 or sound reproduction means 7 comprised in the household appliance 10, expressed in the standard language.

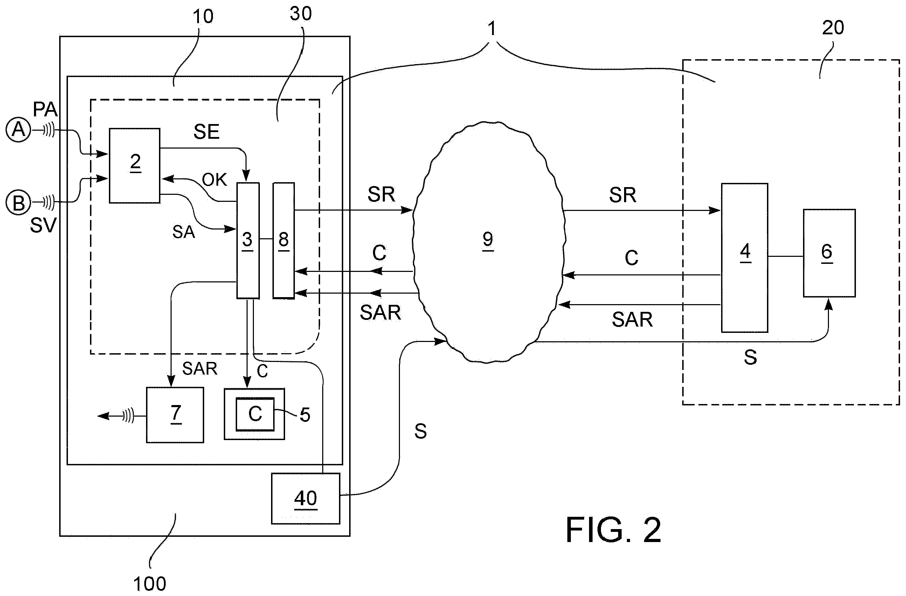

With reference to Figures 1 and 2, further embodiments of the method will be described below.

According to an embodiment of the method, the aforesaid predefined set of languages (i.e., the predefined set of manageable languages) comprises Italian, English, Spanish, French, German and Russian.

According to an implementation option, the aforesaid predefined standard language is English.

According to other implementation options, the predefined standard language is Italian and/or Spanish and/or French and/or German and/or Russian.

According to another embodiment of the method, the step of acquiring information relating to an expression language of the user comprises identifying the expression language of the user on the basis of a language selection made by the user by means of a manual command, or by means of a user interface of the household appliance (for example, the user interface commonly provided in the household appliance to allow the control by the user).

According to another embodiment of the method, the aforesaid steps of acquiring information and of verifying comprise: processing the query and/or request electric signal (SR) by the second processing means 4; verifying whether the expression language of the user belongs to a predefined set of manageable languages or not, based on such a processing; if the expression language of the user belongs to the predefined set of manageable languages, recognizing the language of expression of the user, based on said processing.

In accordance with an implementation option, the aforesaid processing step comprises executing at least one language recognition algorithm and/or procedure in which the voice query and/or request and/or command is expressed, on the basis of an input corresponding to the audio of the voice command.

According to different possible implementation options, the language recognition algorithm and/or procedure is selected from several possible types of language recognition algorithms and/or procedures which are known *per se.*

According to an implementation option, language recognition procedures based on machine learning computing techniques are used.

In accordance with an embodiment of the method, the step of generating a query and/or request electric signal SR comprises generating a respective audio stream query and/or request signal SR, representative of the voice acoustic signal SV.

According to an embodiment, before the step of receiving a voice acoustic signal SV, the method comprises the steps of receiving an activation word PA uttered by the user, and generating a respective activation word electric signal SA, by the voice receiving means 2 integrated in the household appliance; and recognizing the activation word PA by the first processing means 3.

In case of a successful recognition of the activation word, the method includes proceeding with the execution of the step of receiving a voice acoustic signal SV, corresponding to a voice expression of a query and/or request, and the subsequent steps defined in the above embodiments.

According to an implementation option, the activation word is a generic activation word PA uttered by the user, independent of the language, which is recognized on the basis of information pre-stored in the first processing means 3.

According to another implementation option, the activation word is a generic activation word PA uttered by the user, dependent of the language, which is recognized on the basis of information pre-stored in the first processing means 3, the recognition of which does not require a prior identification of the language.

According to another implementation option, the activation word is a generic activation word PA uttered by the user, dependent of the language, which is recognized after the language in which it is expressed has been recognized, and on the basis of the recognized operating language.

In accordance with an embodiment of the method, the step of analyzing the query and/or request electric signal SR comprises recognizing whether the query and/or request, expressed in the recognized operating language, is closed or open.

A query and/or request is recognized as closed if it corresponds to a determined query and/or request, such that the second processing means 4 are capable of providing a predetermined univocal response, expressed in the recognized operating language, in relation to the query and/or request, on the basis of information and/or states of the household appliance accessible to the second processing means 4.

A query and/or request is recognized as open in all the cases in which the query and/or request is not recognized as closed.

According to an implementation option of the method, if the query and/or request is closed, the step of identifying the user query and/or request comprises identifying the recognized closed query and/or request as the user query and/or request; and the step of determining a response to be provided to the user comprises determining as a response the aforesaid predetermined univocal response in relation to the closed query and/or request.

If the query and/or request is open, the step of identifying the user query and/or request comprises interpreting the open query and/or request as a partial query and/or request.

In such a case, the method comprises the further steps of determining and sending an interlocutory response, expressed in the recognized operating language, comprising a request for further clarifications, to the user; and setting a standby state (i.e., waiting mode), designed to receive a further voice expression to complete the request and/or query by the user.

According to an implementation option of the method, the step of analyzing the query and/or request electric signal SR, to identify a user query and/or request comprises interpreting the user query and/or request as a command and/or a control action and/or a question.

In such a case, the method further comprises the following steps, depending on the possible alternatives.

If the user query and/or request is interpreted as a command, the method includes transmitting a command signal corresponding to the command to the first processing means 3 of the household appliance by the second processing means 4.

if the user query and/or request is interpreted as a control action, the method provides consulting, by the second processing means 4, storage means 6 in which the status S of the household appliance is periodically stored 100, to define the action to be executed and the method of execution.

If the user query and/or request is interpreted as a pertinent question, such that the second processing means 4 are capable of providing a univocal response, the method includes generating such a univocal response, expressed in the recognized operating language, by the second processing means 4.

If the user query and/or request is interpreted as a non-pertinent question, such that the second processing means 4 are not capable of providing a univocal response, the method includes generating an interlocutory response requesting further information, expressed in the recognized operating language, by the second processing means 4. In such a case, there are therefore two types of possible interlocutory response: a first type of interlocutory response, determined by the non-recognition of the language of expression of the command; a second type of interlocutory response, in which, even after having recognized the language of expression of the command, the user request is not such as to allow the control procedure to provide a univocal response.

According to an embodiment of the method, the step of recognizing the activation word PA, by first processing means 3, and the step of processing the query and/or request electric signal SR, by the second processing means 4, comprise executing at least one voice recognition algorithm and/or procedure.

According to different possible implementation options, the voice recognition algorithm and/or procedure is selected from several possible types of voice recognition algorithms and/or procedures which are known *per se.*

According to an implementation option, procedures based on machine learning computing techniques are used.

In accordance with an embodiment of the method, the step of generating a response electric signal C, corresponding to the determined response, comprises generating a first string of text characters, in the recognized operating language, corresponding to the response to be provided to the user.

According to a particular implementation option, the aforesaid step further comprises generating a second string of text characters corresponding to the request of the user, as interpreted based on at least one algorithm and/or procedure, which may be executed by the second processing means 4, for transforming a voice command into text.

According to an implementation option, procedures based on computing techniques of the machine learning type, or other algorithms of procedures known *per se,* are used to transform a voice command into text, in any of the recognizable languages.

In accordance with another embodiment of the method, the step of generating a response electric signal C, corresponding to the determined response, comprises, following the step of determining a response to the command and/or control action, the further steps of generating a response audio signal SAR, corresponding to the determined response, by the second processing means 4; then, transmitting the aforesaid response audio signal SAR to the first processing means 3 of the household appliance; finally, reproducing the response audio signal SAR to generate a voice response output, expressed in the recognized operating language, by voice output generation means 7 comprised in the household appliance.

With reference to the step of providing the user with a response, different embodiments are possible, consistent with the respective options for generating an electrical response signal, mentioned above.

In accordance with an embodiment, the step of providing the user with a response comprises providing the user with a written response, in the recognized operating language, by means of household appliance display means 5.

According to an implementation, the written response comprises the display of the aforesaid first string of text characters and/or second string of text characters as pop-ups, in the recognized operating language, on a screen 5 comprised in the household appliance.

In accordance with another embodiment, the step of providing the user with a response comprises providing the user with visual information.

In accordance with an embodiment, the step of providing the user with a response comprises providing the user with a voice response, in the recognized operating language, by generating voice output generation means 7 comprised in the household appliance.

According to an implementation option, the voice response comprises the sound reproduction of the aforesaid response audio signal SAR, generated by the second processing means 4 and transmitted to the first processing means 3.

With reference to Figure 1, a system is described below for controlling and/or interacting with a household appliance 100 by means of a voice input (for example, a voice command) by a user and with the recognition of the language by means of which the voice command or input is expressed.

Such a system comprises voice receiving means 2 and first processing means 3, integrated into the household appliance 100, second processing means 4 (typically remote) and a user interface 5 comprised in the household appliance 100.

The aforesaid voice receiving means 2, integrated in the household appliance 100, are configured to receive a voice acoustic signal SV, corresponding to a voice utterance of a query and/or request pronounced by the user, and transform it into a corresponding first electric signal SE representative of the voice acoustic signal SV.

The first integrated processing means 3 of the household appliance 100 are operatively connected to the aforesaid voice receiving means 2 to receive the aforesaid first electric signal SE, and are configured to generate an query and/or request electric signal SR based on the first electric signal SE, representative of the voice acoustic signal SV.

The second processing means 4 are operatively connected to the aforesaid first processing means 3, and are configured to perform the following steps: receiving from the first processing means 3 the query and/or request electric signal SR; acquiring information relating to an expression language of the user, by means of which the voice utterance of a query and/or request pronounced by the user has been expressed, based on a processing of the query and/or request electric signal SR, or on the basis of information provided by the user; verifying whether the expression language of the user belongs to a predefined set of languages (for example, a predefined set of languages which are manageable and/or recognizable by the second processing means 4) or not.

If the expression language of the user belongs to the aforesaid predefined set of languages, the second processing means 4 are further configured to perform the following further steps: recognizing the expression language of the user and considering the recognized language as the operating language; analyzing the aforesaid query and/or request electric signal SR, on the basis of the recognized operating language, to identify a user query and/or request; determining a response to be provided to the user, in the recognized operating language, on the basis of the user query and/or request identified; generating a response electric signal C corresponding to the determined response; and transmitting this response electric signal C to the first processing means 3 of the household appliance.

If instead, during the verification step, a language belonging to the aforesaid predefined set of languages is not identified, the second processing means 4 are further configured to perform the following further steps: generating and sending to the user an interlocutory response in one or more languages predefined as the standard language or languages for an interlocutory communication, in which the aforesaid interlocutory response comprises a request to the user for further information and/or indications for the user.

The user interface 5 of the household appliance 100 is operatively connected to the first processing means 3 and is configured to provide the user with a visual and/or written and/or voice response.

Such a visual and/or written and/or voice response corresponds to the aforesaid determined response, represented by the response electric signal C, expressed in the recognized operating language (if the expression language of the user has been recognized as one of the manageable languages), or to the aforesaid interlocutory response, expressed in the standard language (if the expression language of the user has not been recognized, or has been recognized as a language not belonging to the set of manageable languages).

Figures 1 and 2 describe further embodiments of system 1.

In accordance with an embodiment, the aforesaid user interface 5 comprises visual display means 5 or sound reproduction means 7.

According to different possible embodiments of the system 1, the first processing means 3 and the second processing means 4 are further configured to execute a method according to any of the embodiments described above.

In accordance with an embodiment, the system 1 further comprises a household appliance control unit 40 and further comprises storage means 6, which are typically located remotely with respect to the household appliance.

The control unit 40 of the household appliance is operatively connected to the first processing means 3 and is configured to cooperate with the first processing means 3 so as to execute commands and/or control actions of the household appliance 100.

In addition, the control unit 40 is configured to control and/or monitor information relating to the status S of the household appliance, comprising information for enabling or disabling the remote control status of the household appliance.

The storage means 6 are operatively connected to both the second processing means 4 and the control unit 40 of the household appliance, and are configured to perform the following actions: receiving from the aforesaid control unit 40 and storing the abovementioned information relating to the state S of the household appliance, and providing the second processing means 4 with updated information for enabling or disabling the remote control status of the household appliance.

According to an implementation option of the system, the visual interface 5 comprises a screen 5 integrated in the household appliance and configured to display a string of text characters C, corresponding to the response provided by the second processing means 4, written in the recognized operating language.

According to an implementation example, the aforesaid display 5 comprises a liquid crystal display or other type of display known in itself, either already provided in the appliance or added to it to provide the visual interface function.

According to another implementation option of the system, the second processing means 4 are further configured to generate a response audio stream signal SAR, corresponding to the determined response, and transmit such a response audio stream signal SAR to the first processing means 2.

In such a case, the system 1 further comprises voice output generation means 7 integrated in the household appliance 100 and configured to reproduce the response audio stream signal SAR to generate a voice response output, expressed in the recognized operating language.

In accordance with a particular implementation option of the system, the voice receiving means 2 comprise one or more microphones; the first processing means 3 comprise one or more electronic processing circuits, and/or one or more electronic processors; and the system 1 further comprises transmission means 8 configured to transmit the aforesaid query or request electric signal SR.

In accordance with an embodiment, the aforesaid voice receiving means 2, the first processing means 3 and the transmission means 8 are integrated in a voice recognition module 30 incorporated in the household appliance 100 itself.

In accordance with a particular implementation option of system, the second processing means 4 comprise one or more electronic processing circuits and/or one or more electronic processors, arranged remotely with respect to the household appliance 100. In such a case, the system 1 further comprises telecommunication means 9 configured to connect the transmission means 8 of the household appliance with the second remote processing means 4.

In accordance with an embodiment of the system, the second processing means 4 are realized in a cloud infrastructure 20, and the telecommunication means 9 comprise wireless communication means, a router and an infrastructure for telecommunicating to the cloud infrastructure 20.

According to an embodiment of the system, the voice receiving means 2 are further configured to receive a first activation word PA uttered by a user, and to generate a respective activation word electric signal SA. The first processing means 3 are further configured to recognize the activation word, and, in case of a positive recognition of the activation word, to execute the aforesaid step of generating a query and/or request electric signal SR.

According to another embodiment of the system, the voice receiving means 2 are further configured to receive a second activation word uttered by a user (aimed at enabling a remote control state) and to generate a respective second activation word electric signal. The first processing means 3 are further configured to recognize the second activation word, and, in case of a positive recognition of the second activation word, to enable the remote control of the household appliance.

According to an implementation option, the aforesaid first and second activation words coincide, and the effect of enabling the remote control occurs if the activation word is pronounced in response to a request by the system to the user for enabling the remote control.

According to an embodiment of the system, the first processing means 3 are further configured to generate, as the query and/or request electric signal SR, an audio stream query and/or request signal SR, representative of the voice acoustic signal SV.

According to an embodiment, the system 1 further comprises voice output generation means 7, integrated in the household appliance 100 and configured to reproduce the response audio stream signal SAR to generate a voice response output.

According to an implementation option, the voice output generation means 7 comprise a loudspeaker or a speaker or other sound reproduction means 7 adapted to provide the audio response.

With reference to Figures 1, 2 and 3, a household appliance 100 according to the invention is now described.

The household appliance 100 comprises a first portion 10 of a system 1 comprising at least the aforesaid voice receiving means 2, first processing means 3, and a visual interface 5 (according to any one of the implementation options described above).

The household appliance 100 is operatively connected to a second portion 20 of a system 1 comprising at least the aforesaid second processing means 4 (according to any of the implementation options described above).

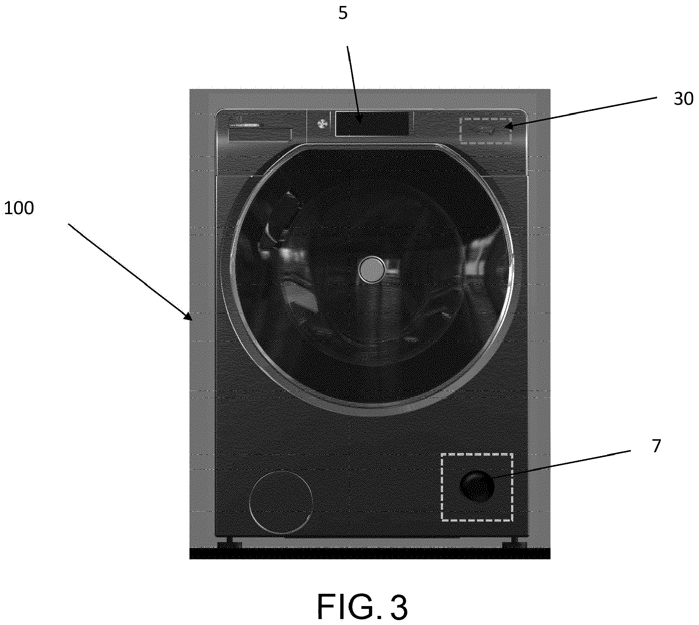

In the example shown in Figure 3, the household appliance is a washing machine. Figure 3 shows the visual interface, i.e., the display 5, the voice recognition module 30, and the sound reproduction means 7.

It should be noticed that the object of the present invention is fully achieved by the method and the system described above by virtue of the functional and structural features thereof.

In fact, the method and the system for controlling and/or communicating with a household appliance described above are capable of allowing a flexible setting of the language of use by means of the selection by the user or, advantageously, even by means of the automatic recognition of the language (within a significant set of identifiable languages), so that the household appliances may be used by users speaking different languages.

Advantageously, the set of recognizable languages may be selected so as to satisfy a large part of potential users, so that a set of relatively few recognizable languages, predefined *a priori,* may cover most of the markets of interest for the household appliance.

On the other hand, the method and the system according to the invention allow to best manage the cases in which the language used by the user is different from the predefined ones, and, in particular, the cases in which the command or the voice request by the user are expressed in a language other than those which are settable and/or manageable. In fact, the method and the system described above require the user to be given a response, in any case, in one or more standard languages, with requests for further information and/or indications related to the languages which may be used or the actions to be taken. Such a feedback prevents the flow of the control procedure from being blocked and the command procedure from falling into "dead spots" in which no feedback is provided to the user.

In addition, some embodiments of the invention, comprising the possibility of providing feedback to the user by displaying the text of the response, advantageously provide an effective management of the voice command languages both in terms of voice response and in terms of written feedback, in the appropriate language.

In other words, the need to manage the voice command in a flexible and effective manner is met, both with regards to the language in which the command is given as well as with regards to the language in which a response to be provided is desired.

In order to meet contingent needs, those skilled in the art can make changes and adaptations to the embodiments of the method and system described above, and can replace elements with others which are functionally equivalent, without departing from the scope of the following claims. All the features described above as belonging to a possible embodiment may be implemented irrespective of the other embodiments described.

## Claims

1. A method for controlling and/or communicating with a household appliance (100) by means of a voice command and with the recognition of the language by means of which the voice command is expressed, comprising the steps of:
- receiving a voice acoustic signal (SV), corresponding to a voice utterance of a query and/or request pronounced by a user, and generating a corresponding first electric signal (SE) representative of the voice acoustic signal (SV), by voice receiving means (2) integrated in the household appliance (100);
- generating a query and/or request electric signal (SR), on the basis of said first electrical signal (SE) received, representative of the voice acoustic signal (SV), by first processing means (3) integrated in the household appliance (10) operatively connected to said voice receiving means (2);
- transmitting said query and/or request electric signal (SR) to second processing means (4);
- acquiring information relating to an expression language of the user, by means of which the voice utterance of query and/or request pronounced by the user has been expressed, on the basis of a processing of said query and/or request electric signal (SR), or on the basis of a command by the user;
- verifying, by said second processing means (4), whether the expression language of the user belongs to a predefined set of languages or not;
if said language of expression of the user belongs to the predefined set of manageable languages, the method further comprises:
- recognizing the expression language of the user;
- considering said recognized language as an operating language;
- analyzing said query and/or request electric signal (SR), by the second processing means (4), on the basis of said recognized operating language, to identify a user query and/or request;
- determining a response to be provided to the user, in the recognized operating language, on the basis of the user query and/or request identified, by the second processing means (4);
- generating a response electric signal (C) corresponding to the determined response, by the second processing means (4);
- transmitting said response electric signal (C) to the first processing means (3) of the household appliance;
- providing the user with a visual and/or written and/or voice response, by means of visual display means (5) or sound reproduction means (7) comprised in the household appliance (10), based on said response electric signal (C), said visual and/or written and/or voice response corresponding to the determined response, expressed in the recognized operating language;
if instead, during the verification step, a language belonging to the predefined set of languages is not identified, the method comprises the further steps of:
- generating and sending to the user an interlocutory response in one or more languages predefined as the standard language or languages for an interlocutory communication, said interlocutory response comprising a request to the user for further information and/or indications for the user;
- providing the user with said interlocutory response, by means of visual display means (5) or sound reproduction means (7) comprised in the household appliance (10), expressed in the standard language.

2. A method according to claim 1, wherein said predefined set of languages comprises Italian, English, Spanish, French, German and Russian languages.

3. A method according to any one of claims 1 or 2, wherein the step of acquiring information relating to an expression language of the user comprises:
- identifying the expression language of the user on the basis of a language selection made by the user by means of a manual command or by means of a user interface of the household appliance intended for controlling of the household appliance by the user.

4. A method according to any one of claims 1 or 2, wherein said steps of acquiring information and of verifying comprise:
- processing said query and/or request electric signal (SR) by the second processing means (4);
- verifying whether the expression language of the user belongs to a predefined set of languages or not, based on said processing;
- if the expression language of the user belongs to the predefined set of languages, recognizing the expression language of the user, based on said processing.

5. A method according to claim 4, wherein the processing step comprises:
- executing at least one language recognition algorithm and/or procedure by means of which the voice query and/or request and/or command is expressed, on the basis of an input corresponding to the audio of the voice command.

6. A method according to any one of the preceding claims, wherein the step of generating a query and/or request electric signal (SR) comprises:
- generating a respective query and/or request audio stream signal (SR), representative of the voice acoustic signal (SV).

7. A method according to any one of the preceding claims, comprising, before said step of receiving a voice acoustic signal (SV), the steps of:
- receiving an activation word (PA) pronounced by the user, and generating a respective activation word electric signal (SA), by said voice receiving means (2) integrated in the household appliance;
- carrying out a recognition of the activation word (PA), by said first processing means (3);
- in the event of a successful recognition of the activation word, proceeding with the execution of said step of receiving a voice acoustic signal (SV), corresponding to a voice utterance of query and/or request, and the subsequent steps defined in claim 1.

8. A method according to any one of the preceding claims, wherein said step of analyzing the query and/or request electric signal (SR) comprises recognizing whether the query and/or request, expressed in the recognized operating language, is closed or open,
wherein a query and/or request is recognized as closed if it corresponds to a specific query and/or request, such that the second processing means (4) are capable of providing a predetermined univocal response, expressed in the recognized operating language, in relation to the query and/or request, on the basis of information and/or states of the household appliance accessible to the second processing means (4),
and wherein a query and/or request is recognized as open in all cases in which said query and/or request is not recognized as closed,
and wherein
if the query and/or request is closed:
- the step of identifying the user query and/or request comprises identifying the recognized closed query and/or request as the user query and/or request;
- the step of determining a response to be provided to the user comprises determining as a response said predetermined univocal response in relation to the closed query and/or request;
if the query and/or request is open:
- the step of identifying the user query and/or request comprises interpreting the open query and/or request as a partial query and/or request,
and the method comprises the further steps of:
- determining and sending to the user an interlocutory response, expressed in the recognized operating language, comprising a request for further clarifications;
- setting a standby state, set up to receive a further voice expression to complete the request and/or query by the user.

9. A method according to any one of the preceding claims, wherein the step of analyzing the query and/or request electric signal (SR), to identify a user query and/or request comprises:
- interpreting the user query and/or request as a command and/or a control action and/or a question;
and wherein the method further comprises the steps of:
if the user query and/or request is interpreted as a command, transmitting a command signal corresponding to the command to the first processing means (3) of the household appliance, by the second processing means (4);
if the user query and/or request is interpreted as a control action, consulting, by the second processing means (4), storage means (6) in which the state of the household appliance is periodically stored (100), to define the action to be executed and the method of execution;
if the user query and/or request is interpreted as a pertinent question, such that the second processing means (4) are capable of providing a univocal response, generating said univocal response, expressed in the recognized operating language, by the second processing means (4);
if the user query and/or request is interpreted as a non-pertinent question, such that the second processing means (4) are not capable of providing a univocal response, generating an interlocutory response requesting further information, expressed in the recognized operating language, by the second processing means (4).

10. A system (1) for controlling and/or interacting with a household appliance (100) by means of a voice control, and with the recognition of the language by means of which the voice command is expressed, comprising:
- voice receiving means (2) integrated in the household appliance (100) configured to receive a voice acoustic signal (SV), corresponding to a voice utterance of a query and/or request pronounced by a user, and transform it into a corresponding first electrical signal (SE) representative of the voice acoustic signal (SV);
- first integrated processing means (3) of the household appliance (100) operatively connected to said voice receiving means (2) to receive said first electrical signal (SE), said first processing means (3) being configured to generate a query and/or request electric signal (SR) on the basis of said first electric signal (SE), representative of the voice acoustic signal (SV);
- second processing means (4), operatively connected to said first processing means (3), said second processing means (4) being configured for:
- receiving from the first processing means (3) said query and/or request electric signal (SR);
- acquiring information relating to an expression language of the user, by means of which the voice utterance of query and/or request pronounced by the user has been expressed, on the basis of a processing of said query and/or request electric signal (SR), or on the basis of a command by the user;
- verifying whether the expression language of the user belongs to a predefined set of languages or not;
if the language of expression of the user belongs to the predefined set of languages, the second processing means (4) are configured to perform the following further steps: recognizing the expression language of the user, considering said recognized language as the operating language; analyzing said query and/or request electric signal (SR), on the basis of the recognized operating language, to identify a user query and/or request; determining a response to be provided to the user, in the recognized operating language, based on the user query and/or request identified; generating a response electric signal (C) corresponding to the determined response; and transmitting said response electrical signal (C) to the first processing means (3) of the household appliance;
if instead, during the verification step, a language belonging to the predefined set of languages is not identified, the second processing means 4 are further configured to perform the further steps of generating and sending to the user an interlocutory response in one or more languages predefined as the standard language or languages for an interlocutory communication, said interlocutory response comprising a request to the user for further information and/or indications for the user;
- a user interface (5) comprised in the household appliance (100), operatively connected to said first processing means (4), configured to provide the user with a visual and/or written and/or voice response,
wherein said visual and/or written and/or voice response corresponds to said determined response, represented by said response electric signal (C), expressed in the recognized operating language, or to said interlocutory response, expressed in the standard language.

11. A system (1) according to claim 10, wherein said user interface (5) comprises visual display means (5) or sound reproduction means (7),
and/or wherein the visual interface (5) comprises a screen (5) integrated in the household appliance configured to display a string of text characters (C), corresponding to the response provided by the second processing means (4), written in the recognized operating language.

12. A system (1) according to any one of claims 10-11, wherein the second processing means (4) are further configured to generate a response audio stream signal (SAR), in the recognized operating language, corresponding to the determined response, and transmitting said response audio stream signal (SAR) to the first processing means (2);
wherein the system (1) further comprises voice output generation means (7) integrated in the household appliance (100) and configured to reproduce the response audio stream signal (SAR) to generate a voice response output, expressed in the recognized operating language.

13. A system according to any one of claims 10-12, wherein:
- the voice receiving means (2) comprise one or more microphones;
- the first processing means (3) comprise one or more electronic processing circuits, and/or one or more electronic processors;
and wherein the system (1) further comprises transmission means (8) configured to transmit said query or request electric signal (SR),
and wherein said voice receiving means (2), said first processing means (3) and said transmission means (8) are integrated in a voice recognition module (30) incorporated in the household appliance (100).

14. A system (1) according to any one of claims 11-13 wherein the second processing means (4) comprise one or more electronic processing circuits, and/or one or more electronic processors, arranged remotely with respect to the household appliance (100),
and wherein the system (1) further comprises telecommunication means (9) configured to connect the transmission means (8) of the household appliance with the second processing means (4),
and/or wherein the second processing means (4) are realized in a cloud infrastructure (20), and wherein the telecommunication means (9) comprise wireless communication means, a router and an infrastructure for telecommunicating to the cloud infrastructure (20).

15. A household appliance (100) comprising a first portion (10) of a system (1) according to any one of claims 11-14, comprising at least said voice receiving means (2), first processing means (3) and a visual interface (5),
said household appliance (100) being operatively connected to a second portion (20) of a system (1) according to any one of claims 11-14 comprising at least said second processing means (4).
